# EUROPÄISCHE PATENTANMELDUNG

(11) **EP 1 797 759 A2**
(43) Veröffentlichungstag der Anmeldung: **20.06.2007**
(21) Anmeldenummer: 06126134.3
(22) Anmeldetag: 14.12.2006
(51) Int. Cl.: A21B 3/07

(54) **Vorrichtung zum Einfüllen von Backgut**

(30) Priorität: 17.12.2005 DE 102005060539
(71) Anmelder: Werner & Pfleiderer Lebensmitteltechnik Sachsen GmbH, 02689 Sohland (DE); Pascal Maschinentechnik GmbH, 02625 Bautzen (DE)
(72) Erfinder: Paulick, Lothar, 02625, Bautzen (DE); Jeremias, Frank, 02625 Bautzen (DE)
(74) Vertreter: Bittner, Bernhard

(57) **Zusammenfassung**

Eine Vorrichtung zum Einfüllen von Backgut insbesondere in einen Backofen mit einem Aufnahmebehältnis (2), welches zur Aufnahme einer Vielzahl von Teiglingen (11) geeignet ist, wobei das Aufnahmebehältnis (2) um eine vorgegebene Drehachse (X) drehbar gelagert ist, und wenigstens eine Austrittsöffnung (5) aufweist, durch welche einzelne Teiglinge (11) aus dem Aufnahmebehältnis herausfallen können. Weiterhin ist bevorzugt eine Transporteinrichtung (7) vorgesehen, welche aus dem Aufnahmebehältnis herausgefallene Teiglinge in Richtung des Backofens transportiert.

## Beschreibung

Die vorliegende Erfindung ist auf eine Vorrichtung zum Einfüllen von Backgut, insbesondere in einem Backofen gerichtet. Aus dem Stand der Technik sind Backöfen bekannt, in welche zu backendes Backgut eingebracht und nach Vollendung des Backvorgangs wieder entnommen werden kann. Insbesondere im Rahmen von Ladenbacköfen, welche beispielsweise in Filialen von Lebensmittelketten zum Einsatz kommen können, ist es jedoch wünschenswert, den Backvorgang wenigstens teilweise zu automatisieren.

Eine Möglichkeit dieser Automatisierung besteht darin, eine Vielzahl von Backrohlingen, im Folgenden auch als Teiglinge bezeichnet, mittels eines Trichters in einen Backofen einzufüllen. Bei dieser Vorgehensweise ergibt sich jedoch das Problem, dass die Menge der in dem Backofen gelangenden Teiglinge nur schwer einzuteilen bzw. zu portionieren ist. Auch kann es zu einer Beschädigung der Teiglinge kommen, wenn mehrere Teiglinge auf einmal in den Ofen fallen.

Der vorliegenden Erfindung liegt daher die Aufgabe zugrunde, eine Vorrichtung zum Einfüllen von Backgut zur Verfügung zu stellen, welche ein Portionieren des Backguts erlaubt. Daneben soll verhindert werden, dass eine größere Anzahl von Teiglingen gleichzeitig ungewollt in den Backofen gelangt.

Diese Aufgabe wird erfindungsgemäß durch eine Vorrichtung nach Anspruch 1 und ein Verfahren nach Anspruch 16 erreicht. Vorteilhafte Ausführungsformen und Weiterbildungen sind Gegenstand der Unteransprüche.

Eine erfindungsgemäße Vorrichtung zum Einfüllen von Backgut insbesondere in einen Backofen, weist wenigstens ein Aufnahmebehältnis auf, welches zur Aufnahme einer Vielzahl von Teiglingen geeignet ist. Dabei ist das Aufnahmebehältnis um eine vorgegebene Drehachse drehbar gelagert und weist wenigstens eine Austrittsöffnung auf, durch welche einzelne Teiglinge aus dem Aufnahmebehältnis herausfallen können. Weiterhin ist bevorzugt eine Transporteinrichtung vorgesehen, welche aus dem Aufnahmebehältnis herausfallende Teiglinge in Richtung des Backofens transportiert.

Unter Teiglingen werden die zu backenden Backwaren in ihrem rohen bzw. halbfertigen Zustand verstanden. Auch können die Teiglinge in gefrorenem oder angetautem Zustand vorliegen. Unter einer Transporteinrichtung wird jegliche Einrichtung verstanden, die geeignet ist, Objekte wie hier die Teiglinge zu transportieren. Dabei kann es sich sowohl um selbsttätige bzw. aktive Transporteinrichtungen wie Transportbänder und dergleichen handeln, als auch um passive Transporteinrichtungen, wie beispielsweise schräg angeordnete Rohre oder Rutschen, durch welche oder auf denen das Backgut rutschen kann.

Bei einer bevorzugten Ausführungsform weist das Aufnahmebehältnis eine im Wesentlichen kegelstumpfförmige Gestalt auf. Vorzugsweise ist insbesondere die Innenoberfläche als Aufnahmebehältnis im Wesentlichen kegelstumpfförmig. Besonders bevorzugt erweitert sich der Durchmesser des Aufnahmebehältnisses in Richtung der Austrittsöffnung. Bei dieser Ausführungsform entsteht innerhalb des Aufnahmebehältnisses eine Schräge, entlang derer die einzelnen Teiglinge in Richtung der wenigstens einen Austrittsöffnung gleiten können.

Bevorzugt ist die Drehachse des Aufnahmebehältnisses gleichzeitig dessen Symmetrieachse. Dies bedeutet im Falle eines kegelstumpfförmigen Aufnahmebehältnisses, dass dessen Kegelachse gleichzeitig die Drehachse ist. Es ist jedoch auch möglich, die Drehachse schräg bezüglich der Symmetrieachse anzuordnen, um auf diese Weise ebenfalls ein Austreten der Teiglinge durch die Austrittsöffnung zu erreichen. Auf diese Weise können auch zylinderförmige Behältnisse zum Einsatz kommen.

Auch könnte die Drehachse parallel versetzt zu der Symmetrieachse angeordnet sein, und auf diese Weise eine exzentrische Drehung des Aufnahmebehältnisses erreicht werden.

Bei einer weiteren bevorzugten Ausführungsform ist die Austrittsöffnung an einer Stirnfläche des Aufnahmebehältnisses angeordnet und, wie oben ausgeführt, besonders bevorzugt an derjenigen Stirnfläche, die den größeren Durchmesser aufweist. Mit anderen Worten erweitert sich der Durchmesser des Aufnahmebehältnisses in Richtung der wenigstens einen Austrittsöffnung. Damit treten die einzelnen Teiglinge durch die Stirnfläche aus dem Aufnahmebehältnis aus.

Die wenigstens eine Austrittsöffnung könnte jedoch auch in der Mantelfläche, bevorzugt nahe der Stirnfläche mit dem größeren Durchmesser vorgesehen sein.

Bei einer weiteren bevorzugten Ausführungsform ist innerhalb des Aufnahmebehältnisses wenigstens eine Mitnahmeeinrichtung und besonders bevorzugt eine Vielzahl von Mitnahmeeinrichtungen zur Mitnahme einzelner Teiglinge vorgesehen. Diese Mitnahmebehältnisse, bei denen es sich beispielsweise um an den Öffnungen angeordnete Schrägflächen handeln kann, dienen dazu, einzelne Teiglinge anzuheben und zu bewirken, dass diese Teiglinge erst bei einer bestimmten Drehstellung des Aufnahmebehältnisses aus der Austrittsöffnung herausfallen. Die Mitnahmeeinrichtungen sind dabei bevorzugt fest an dem Aufnahmebehältnis angeordnet und drehen sich damit gemeinsam mit diesem. Bevorzugt ist die wenigstens eine Mitnahmeeinrichtung an der Austrittsöffnung angeordnet. Dabei erfolgt die Anordnung derart, dass die Teiglinge bei einer vorgegebenen Drehstellung des Aufnahmebehältnisses durch die Austrittsöffnung aus dem Aufnahmebehältnis herausfallen. Dies kann durch entsprechende Schrägstellungen der Mitnahmeeinrichtung erreicht werden. Bevorzugt ist eine Vielzahl von Mitnahmeeinrichtungen vorgesehen, die jeweils an den diesen zugeordneten Austrittsöffnungen vorgesehen sind.

Bei einer weiteren bevorzugten Ausführungsform ist das Aufnahmebehältnis aus mehreren kegelstumpfförmigen trennbaren Segmenten aufgebaut. Durch die Trennbarkeit der Segmente wird erreicht, dass einzelne Segmente entfernt werden können, um das Aufnahmebehältnis mit Teiglingen aufzufüllen. Auch wird durch die Ausführungsform aus kegelstumpfartigen trennbaren Segmenten eine Innenreinigung des Aufnahmebehältnisses erleichtert. Es können jedoch auch in der Mantelfläche des Aufnahmebehältnisses verschließbare Öffnungen vorgesehen sein.

Bei einer weiteren bevorzugten Ausführungsform kann das Aufnahmebehältnis an wenigstens einer Stirnfläche geöffnet werden. Auch das Öffnen an wenigstens einer Stirnfläche dient dazu, das Aufnahmebehältnis über die entsprechende Stirnfläche mit Teiglingen aufzufüllen.

Bevorzugt weist das Aufnahmebehältnis eine Größe auf, die geeignet ist um zwischen 150 und 300 Teiglinge bevorzugt zwischen 170 und 250 Teiglinge aufzunehmen.

Bei einer weiteren bevorzugten Ausführungsform weist das Aufnahmebehältnis eine Vielzahl von Austrittsöffnungen auf. Vorzugsweise sind zwischen 4 und 8 Austrittsöffnungen vorgesehen und besonders bevorzugt 6 Austrittsöffnungen. Vorzugsweise sind die Austrittsöffnungen gleichmäßig in der Stirnfläche angeordnet. Auf diese Weise kann auch bei einer langsamen Drehung der Trommel eine ausreichend hohe Anzahl an Teiglingen ausgeworfen werden. Vorzugsweise dreht sich die Trommel mit einer Geschwindigkeit zwischen 0,2 und 5 Umdrehungen pro Minute vorzugsweise zwischen 0,5 und 2 Umdrehungen pro Minute und besonders bevorzugt mit einer Geschwindigkeit im Bereich von 1 Umdrehung pro Minute.

Bei einer weiteren bevorzugten Ausführungsform ist eine Abdeckeinrichtung vorgesehen, welche wenigstens einen Teil der Austrittsöffnung wenigstens zeitweise bedeckt. Bei dieser Abdeckeinrichtung handelt es sich vorzugsweise um eine Blende, die vor einem unteren Bereich des Aufnahmebehältnisses bzw. der vorderen Stirnfläche des Aufnahmebehältnisses angeordnet ist. Durch diese Abdeckeinrichtung kann verhindert werden, dass die Teiglinge bereits aus den Austrittsöffnungen fallen, während sich diese Austrittsöffnungen bei der Drehung des Aufnahmebehältnisses unten befinden.

Bei einer weiteren bevorzugten Ausführungsform ist die Transporteinrichtung ein Transportband. Dieses Transportband ist vorzugsweise in der Ebene der Stirnfläche des Aufnahmebehältnisses angeordnet und dabei im Wesentlichen waagerecht. Mit diesem Transportband können die ausgeworfenen Teiglinge in Richtung eines Backofens transportiert werden. Es wäre jedoch auch eine schräge Anordnung des Transportbandes denkbar, etwa wenn die Teiglinge wieder geringfügig nach oben transportiert werden müssen. Anstelle eines Transportbandes kann jedoch auch eine Schräge vorgesehen sein, entlang derer die Teiglinge in Richtung des Backofens rutschen.

Vorzugsweise weist die Transporteinrichtung eine Erkennungseinrichtung auf, die das Auftreffen von Teiglingen auf der Transporteinrichtung erfasst. Bei dieser Erkennungseinrichtung kann es sich beispielsweise um eine optische Erkennungseinrichtung wie eine Lichtschranke handeln, die in der Bewegungsrichtung des Transportbandes ein Auftreffen der Teiglinge erfasst. Daneben können jedoch auch andere Erkennungseinrichtungen, wie solche Sensoren, die das Auftreffen von Gewicht erfassen, vorgesehen sein.

Vorzugsweise ist auch eine weitere Erkennungseinrichtung angeordnet, die den Durchgang eines Teiglings am Ende der Transporteinrichtung erfasst.

Bei einer weiteren bevorzugten Ausführungsform ist eine Steuerungseinrichtung vorgesehen, welche die Drehbewegung des Aufnahmebehältnisses und die Bewegung der Transporteinrichtung steuert. Vorzugsweise bewirkt die Steuereinrichtung, dass die Drehbewegung des Aufnahmebehältnisses angehalten wird, sobald wenigstens ein Teigling auf der Transporteinrichtung durch die Erkennungseinrichtung erkannt wird. Auf diese Weise wird erreicht, dass kein weiteres Backgut in Richtung des Backofens gefördert wird. Damit kann wiederum verhindert werden, dass mehrere Teiglinge gleichzeitig in den Backofen gelangen wodurch wiederum eine schonende Behandlung der Teiglinge ermöglicht wird.

In einer Ausführungsform bewegt sich die Transporteinrichtung im Wesentlichen permanent. Es ist jedoch auch denkbar, dass die Transporteinrichtung bzw. das Förderband erst dann anläuft, wenn bzw. sobald ein Teigling auf ihm aufliegt. Vorzugsweise läuft das Förderband dann so lange, bis der betreffende Teigling das Förderband wieder verlassen hat, und in den Backofen hineingefallen ist. Mit der weiteren Erkennungsrichtung am Ende des Bandes kann erkannt werden, dass ein Teigling das Ende des Förderbands erreicht bzw. dieses verlassen hat.

Sobald die Erkennungseinrichtungen erkennen, dass keine Teiglinge mehr auf dem Förderband liegen, bewirkt die Steuereinrichtung, dass sich das Aufnahmebehältnis wieder dreht, wodurch weitere Teiglinge ausgegeben werden.

Bei einer bevorzugten Ausführungsform weist das Aufnahmebehältnis eine Länge zwischen 50 cm und 2 m bevorzugt zwischen 80 cm und 1,50 m und besonders bevorzugt im Bereich von 1 m auf. Die jeweiligen Austrittsöffnungen sind vorzugsweise gleichmäßig auf der Stirnseite des Aufnahmebehältnisses verteilt.

Die vorliegende Erfindung ist weiterhin auf ein Verfahren zum Einfüllen von Backgut in einen Backofen gerichtet, wobei in einem Schritt das Aufnahmebehältnis, in dem eine Vielzahl von Teiglingen angeordnet ist, gedreht wird, wobei durch die Drehung einzelne Teiglinge über eine Austrittsöffnung des Aufnahmebehältnisses ausgegeben werden, und auf eine Transporteinrichtung treffen. In einem weiteren Verfahrensschritt wird die Drehbewegung des Aufnahmebehältnisses angehalten, sobald auf der Transporteinrichtung das Vorhandensein wenigstens eines Teiglings registriert wird. Sobald der Teigling die Transporteinrichtung wieder verlassen hat, wird die Drehbewegung des Aufnahmebehältnisses erfindungsgemäß wieder aufgenommen.

Die vorliegende Erfindung ist weiterhin auf eine Backvorrichtung zum Backen mit einer Vorrichtung der oben beschriebenen Art gerichtet. Vorzugsweise weist die Backvorrichtung einen Backofen auf, bei dem es sich besonders bevorzugt um einen Umluftofen handelt. Die erfindungsgemäße Backvorrichtung weist weiterhin vorzugsweise wenigstens einen Aufnahmebehälter für gebackenes Backgut auf. Daneben kann in dem Backofen eine Transporteinrichtung vorgesehen sein, die das Backgut vorzugsweise von oben nach unten transportiert. Bevorzugt handelt es sich dabei bei dieser Transporteinrichtung um eine Vielzahl von im Wesentlichen parallel angeordneten Platten, denen gegenüber das Backgut verschoben wird, und auf diese Weise von jeweils einer höher liegenden Platte zu einer darunter liegenden Platte gelangt.

Weitere Vorteile und Ausführungsformen ergeben sich aus den beigefügten Zeichnungen. Darin zeigen:
- Fig. 1: eine schematische Darstellung einer erfindungsgemäßen Vorrichtung zum Einfüllen von Backgut; und
- Fig. 2: eine Draufsicht auf die Vorrichtung aus Fig. 1.

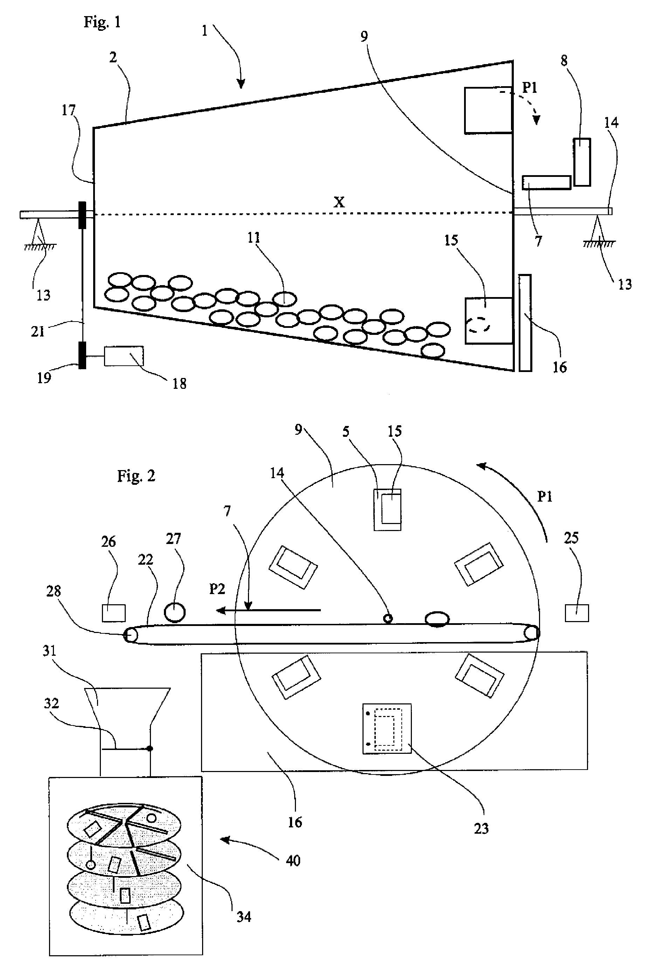

Fig. 1 zeigt eine Vorrichtung 1 zum Einfüllen von Backgut, mit einem Aufnahmebehältnis 2, in dem eine Vielzahl von Teiglingen 11 angeordnet ist. Das Aufnahmebehältnis 2 ist in Form eines Kegelstumpfes ausgebildet, womit erreicht wird, dass die Teiglinge in Richtung der vorderen Stirnfläche 9 des Aufnahmebehältnisses 2 rutschen. An dieser Stirnfläche ist eine Vielzahl von (in Fig. 1 nicht gezeigten) Austrittsöffnungen angeordnet. Im Inneren des Aufnahmebehältnisses 2 befinden sich Mitnahmeeinrichtungen 15, die bei einer Drehung des Aufnahmebehältnisses 2 bewirken, dass die Teiglinge bei einer vorgegebenen Drehstellung aus der Austrittsöffnung austreten können.

Dieser Austritt der Teiglinge ist durch den gekrümmten Pfeil P1 veranschaulicht. Damit sind die Mitnehmer als Schrägflächen konzipiert, die, sobald die betreffende Austrittsöffnung oberhalb der Drehachse X ist, schräg nach unten weist. Das Aufnahmebehältnis 2 ist mit einer Welle 14 und zwei Lagereinrichtungen 13 drehbar gelagert. Dabei fällt die Welle 14 und damit die Drehachse X des Aufnahmebehältnisses geometrisch mit der Symmetrieachse des Aufnahmebehältnisses zusammen.

Dabei können die Mitnahmeeinrichtungen beispielsweise derart gegenüber der Ebene der Stirnfläche 9 geneigt sein, dass die Teiglinge, wie durch den Pfeil P 1 angedeutet, in der oberen Drehstellung durch die Austrittsöffnung 5 (vgl. Fig. 2) nach außen gelangen.

Wie aus Fig. 1 ersichtlich, ist die Drehachse X horizontal angeordnet. Bevorzugt ist diese Drehachse X allgemein im Wesentlichen horizontal angeordnet, wobei unter im Wesentlichen horizontal auch Winkelabweichungen von bis zu 30 ° bezüglich der horizontalen Lage verstanden werden.

Das Bezugszeichen 18 bezieht sich auf eine Antriebseinrichtung wie einen Motor, der über ein Zahnrad 19 und eine Kettenverbindung 21 die Welle 14 und damit das fest auf der Welle 14 angeordnete Aufnahmebehältnis 2 dreht. Neben dem Kettenantrieb könnte jedoch auch ein Riemenantrieb vorgesehen sein, oder ein Antrieb über 2 ineinander greifende Zahnräder, oder dergleichen. Die Antriebseinrichtung ist hier an der hinteren Stirnfläche 17 angeordnet, dies ist jedoch nicht zwingend. Daneben kann der Motor auch direkt auf die Welle 14 aufgesteckt werden.

Das Bezugszeichen 7 bezieht sich auf eine Transporteinrichtung, auf die die aus der Austrittsöffnung austretenden Teiglinge 11 fallen. Die Transporteinrichtung transportiert die Teiglinge in einer Richtung, die senkrecht zur Figurenebene steht. Die Transporteinrichtung wird durch einen weiteren Motor 8 angetrieben.

Das Bezugszeichen 16 bezieht sich auf eine Abdeckeinrichtung bzw. Blende, die verhindert, dass die Teiglinge bereits dann aus dem Aufnahmebehältnis 2 herausfallen können, wenn sich die entsprechende Öffnung noch im unteren Bereich d. h. hinter der Blende 16 befindet.

Fig. 2 zeigt eine Draufsicht auf die erfindungsgemäße Vorrichtung, genauer eine Draufsicht auf die Stirnfläche 9 mit der davor angeordneten Transporteinrichtung 7. Man erkennt, dass durch die Blende 16 in diesem Fall verhindert wird, dass die Teiglinge durch die drei unteren Austrittsöffnungen 5 nach außen treten können. Bei der in Fig. 2 gezeigten Ausführungsform dreht sich die Aufnahmebehältnis entlang des Pfeils P2 entgegen dem Uhrzeigersinn. Sobald die Öffnungen den Bereich der Blende 16 verlassen haben, können die Teiglinge durch die Austrittsöffnung 5 heraus auf die Transporteinrichtung 7 fallen. Zu diesem Zweck sind, wie oben ausgeführt, im Inneren des Aufnahmebehältnisses 2 Mitnahmeeinrichtungen 15 angeordnet, die in einem solchen Winkel gedreht sind, dass sie eine nach außen weisende Neigung bilden. Außerhalb der Öffnungen können Lappen 23 angeordnet sein, die bewirken, dass ein oder maximal zwei Teiglinge durch die Öffnungen nach außen treten. Diese Lappen 23 können beispielsweise aus Gummi oder einem flexiblen Kunststoff bestehen. Auch auf diese Weise können die Teiglinge beim Auftreffen auf das Band geschont werden. Daneben verhindern die Lappen auch, dass die Teiglinge an der Blende 16 entlang geschoben und dadurch beschädigt werden.

Die Transporteinrichtung 7 weist zwei Rollen 28 auf, um die ein Transportband 22 angeordnet ist. Die Bezugszeichen 25 und 26 beziehen sich auf eine Lichtschrankeneinheit d. h. beispielsweise auf einen Sender in Form einer Leuchtdiode 25 und einem Empfänger in Form einer Fotozelle 26. Sobald ein Teigling 11 auf das Transportband 22 gelangt, meldet dies die Lichtschrankeneinheit 25, 26. Auch könnten die Positionen des Senders und des Empfängers vertauscht sein. Schließlich wäre es auch denkbar, an einer der Positionen sowohl einen Sender als auch einen Empfänger vorzusehen und an der anderen Position einen Spiegel oder dergleichen.

In der Folge wird von einer Steuereinrichtung an den Motor 18 das Signal ausgegeben, dass die Drehbewegung des Aufnahmebehältnisses 2 angehalten wird. Währenddessen befördert die Transporteinrichtung 7 den Teigling in Richtung der Rolle 28. Das Bezugszeichen 27 bezieht sich auf eine weitere Erkennungseinrichtung, die vorgesehen ist, um zu erkennen, sobald ein Teigling 11 das Ende des Transportbandes 22 erreicht hat. Sobald das Erreichen des Endes des Transportbandes erkannt wird, bewirkt die Steuereinrichtung, dass die Transporteinrichtung 7 angehalten wird bis sich die Klappe 32, die in einem Trichter 31 angeordnet ist, geöffnet hat. Sobald die Klappe geöffnet ist, kann ein Teigling in den Backofen 34 bzw. auf ein darin befindliches Plattensystem 40 fallen.

Dabei ist es möglich, dass der Teigling im Wesentlichen frei fällt, es können jedoch auch schräge Rutschenanordnungen vorgesehen sein, die die Fallbewegung der Teiglinge bremsen. Auch wäre es möglich, dass die Teiglinge 11 direkt ohne das Transportband 22 in den Trichter fallen. In diesem Fall wäre der Trichter 31 selbst als Transporteinrichtung anzusehen.

Die Klappe 32 kann mit einem (nicht gezeigten) Zählmechanismus verbunden sein, der überprüft, wie viele Teiglinge in den Backofen eintreten. Auch die Erkennungseinrichtungen 26 und 27 können mit entsprechenden Zählmechanismen verbunden sein. Auf diese Weise kann indirekt festgestellt werden, wie viele Teiglinge 11 sich noch in dem Aufnahmebehältnis 2 befinden, wenn die Anfangsanzahl der Teiglinge bekannt ist. Es können jedoch auch andere Erkennungseinrichtungen direkt an oder in dem Aufnahmebehältnis 2 vorgesehen sein, etwa Füllstandanzeigen oder dergleichen.

Sobald das Lichtschrankensystem 26, 25 erkennt, dass auf der Transporteinrichtung kein Teigling mehr vorhanden ist, beginnt die Bewegung des Aufnahmebehältnisses von Neuen. Bei einer weiteren bevorzugten Ausführungsform können im Inneren des Aufnahmebehältnisses auch schräg angeordnete Stege vorhanden sein, welche ein Umwälzen der Teiglinge und eine Bewegung derselben in Richtung der Stirnfläche 9 bewirken.

Auch kann im Inneren des Aufnahmebehältnisses ein Düsensystem vorgesehen sein, welches eine Reinigung insbesondere der Innenflächen der Tommel erlaubt.

Wie eingangs erwähnt, kann das Aufnahmebehältnis 2 auch segmentiert sein, wobei einzelne Segmente abnehmbar sein können. Auch kann das Aufnahmebehältnis 2 eine zu öffnende Klappe aufweisen, durch welche hindurch dem Aufnahmebehältnis 2 neue Teiglinge zugeführt werden können. Das Aufnahmebehältnis 2 kann aus Kunststoff oder Metall gefertigt sein.

Unterhalb des Backofens 34 kann ein weiteres (nicht gezeigtes) Aufnahmebehältnis zur Aufnahme von bereits fertig gebackenem Backgut vorgesehen sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zum Einfüllen von Backgut
- 2: Aufnahmebehältnis
- 7: Transporteinrichtung
- 8: Motor
- 9: Stirnfläche
- 11: Teiglinge
- 13: Lagereinrichtung
- 14: Welle
- 15: Mitnahmeeinrichtung
- 16: Abdeckeinrichtung
- 17: hintere Stirnfläche
- 18: Antriebseinrichtung
- 19: Zahnrad
- 21: Kettenverbindung
- 22: Transportband
- 23: Lappen
- 25: Sender
- 26: Empfänger
- 27: Erkennungseinrichtung
- 28: Rollen
- 31: Trichter
- 32: Klappe
- 34: Backofen
- 40: Plattensystem
- X: Drehachse

## Patentansprüche

1. Vorrichtung zum Einfüllen von Backgut insbesondere in einen Backofen mit einem Aufnahmebehältnis (2), welches zur Aufnahme einer Vielzahl von Teiglingen (11) geeignet ist, wobei das Aufnahmebehältnis (2) um eine vorgegebene Drehachse (X) drehbar gelagert ist, und wenigstens eine Austrittsöffnung (5) aufweist, durch welche einzelne Teiglinge (11) aus dem Aufnahmebehältnis herausfallen können,
**dadurch gekennzeichnet, dass**
an dem Aufnahmebehältnis (2) wenigstens eine Mitnahmeeinrichtung (15) zur Mitnahme einzelner Teiglinge (11) angeordnet ist.

2. Vorrichtung nach Anspruch 1,
**dadurch gekennzeichnet, dass**
eine Transporteinrichtung (7) vorgesehen ist, welche aus dem Aufnahmebehältnis herausgefallene Teiglinge in Richtung des Backofens transportiert.

3. Vorrichtung nach wenigstens einem der vorangegangenen Ansprüche,
**dadurch gekennzeichnet, dass**
das Aufnahmebehältnis (2) eine Vielzahl von Austrittsöffnungen (5) aufweist.

4. Vorrichtung nach Anspruch 3
**dadurch gekennzeichnet, dass**
eine Abdeckeinrichtung (16) vorgesehen ist, welche die Austrittsöffnungen (5) wenigstens zeitweise bedeckt.

5. Vorrichtung nach wenigstens einem der vorangegangenen Ansprüche,
**dadurch gekennzeichnet, dass**
die Transporteinrichtung (7) eine Erkennungseinrichtung (25, 26) aufweist, die das Auftreffen von Teiglingen auf der Transporteinrichtung erfasst.

6. Vorrichtung nach wenigstens einem der vorangegangenen Ansprüche,
**dadurch gekennzeichnet, dass**
eine Steuerungseinrichtung vorgesehen ist, welche die Drehbewegung des Aufnahmebehältnisses (2) und die Bewegung der Transporteinrichtung (7) steuert.

7. Vorrichtung nach Anspruch 6,
**dadurch gekennzeichnet, dass**
die Steuerungseinrichtung bewirkt, dass die Drehbewegung des Aufnahmebehältnisses (2) angehalten wird, sobald wenigstens ein Teigling (11) auf der Transporteinrichtung (7) erkannt wird.

8. Verfahren zum Einfüllen von Backgut in einen Backofen mit den Schritten Drehen eines Aufnahmebehältnisses, in dem eine Vielzahl von Teiglingen angeordnet ist, wobei durch die Drehung einzelne Teiglinge (11) über eine Austrittsöffnung (5) des Aufnahmebehältnisses (2) ausgegeben und auf eine Transporteinrichtung (7) treffen;
Anhalten der Drehbewegung der Aufnahmebehältnis (2), sobald auf der Transporteinrichtung (7) das Vorhandensein wenigstens eines Teiglings (11) registriert wird; Wiederaufnahme der Drehbewegung des Aufnahmebehältnisses, sobald der Teigling (11) die Transporteinrichtung (7) verlassen hat.

9. Backvorrichtung zum Backen von Backgut mit einer Vorrichtung nach wenigstens einem der vorangegangenen Ansprüche 1 - 7.

10. Backvorrichtung nach Anspruch 9,
**dadurch gekennzeichnet, dass**
die Backvorrichtung einen Backofen aufweist.
